# EUROPÄISCHE PATENTSCHRIFT

(11) **EP 1 500 249 B1**
(45) Veröffentlichungstag und Bekanntmachung des Hinweises auf die Patenterteilung: **21.02.2018**
(21) Anmeldenummer: 03747103.4
(22) Anmeldetag: 15.04.2003
(51) Int. Cl.: H04W 12/02, H04L 29/06, H04W 24/00, H04W 88/04, H04W 88/18

(54) **VERFAHREN UND VORRICHTUNG ZUM ÜBERTRAGEN VON DATENPAKETEN IN EINEM KOMMUNIKATIONSSYSTEM BEI VERWENDUNG PEP UND EINES RAN**
METHOD AND DEVICE FOR TRANSMITTING DATA PACKETS IN A COMMUNICATIONS SYSTEM INVOLVING THE USE OF A PERFORMANCE ENHANCING PROXY (PEP) AND OF A RADIO ACCESS NETWORK (RAN)
PROCÉDÉ ET DISPOSITIF POUR TRANSMETTRE DES PAQUETS DE DONNÉES DANS UN SYSTÈME DE COMMUNICATION AU MOYEN D'UN DISPOSITIF D'ASSISTANCE (PEP) ET D'UN RÉSEAU D'ACCÈS RADIO (RAN)

(30) Priorität: 26.04.2002 DE 10218811; 26.04.2002 EP 02009611
(43) Veröffentlichungstag der Anmeldung: 26.01.2005
(73) Patentinhaber: Siemens Aktiengesellschaft, 80333 München (DE)
(72) Erfinder: ASSAF, Nadim, 81377 München (DE); DILLINGER, Markus, 81737 München (DE); LUO, Jijun, 81677 München (DE); MENENDEZ, Luis, 79585 Steinen (DE)
(86) Internationale Anmeldenummer: PCT/EP2003/003931
(87) Internationale Veröffentlichungsnummer: WO 2003/092239

(56) Entgegenhaltungen:
- WO-A-01/60025
- WO-A-01/63881

## Beschreibung

Die Erfindung bezieht sich auf ein Verfahren zum Übertragen von Datenpaketen in einem Kommunikationssystem bei Verwendung einer die Übertragung unterstützenden Einrichtung (PEP - Performance Enhancing Proxy).

In funkgestützten Kommunikationssystemen, beispielsweise Mobilfunknetze, werden Datenpakete unterschiedlicher Größe übertragen. Üblicherweise umfassen solche Datenpakete einen Kopfabschnitt (engl. Header) und einen Datenabschnitt. Im Kopfabschnitt befinden sich Informationen über die Adresse des Empfängers, des Senders sowie möglicherweise Zwischenstationen auf dem Datenweg. Weiterhin befinden sich in dem Kopfabschnitt auch zusätzliche Informationen, beispielsweise eine Datenpaketnummer zur empfängerseitigen Rekonstruktion eines ursprünglichen Datenstroms in der richtigen Paketreihenfolge oder Merker (engl. Flags) zur Kennzeichnung bestimmter Datencodierungen oder Übertragungsbedingungen.

Zum Steuern des Datenflusses in insbesondere den netzseitigen Stationen wird ein Übertragungssteuerprotokoll wie z.B. das so genannte TCP (Transmission Control Protocol) verwendet. Da TCP-Verbindungen nur schlechte Verbindungsbedingungen bieten, wird zur Verbesserung der TCP-Verbindungen in dem funkgestützten Teil des Netzes, der auch als RAN (Radio Access Network) bezeichnet wird, ein Protokoll oder eine Verknüpfung mehrerer Protokolle verwendet, welche als PEP (Performance Enhancing Proxy) bezeichnet werden und in einem Zwischenknoten des Netzes implementiert sind.

In einer derartigen Umgebung reagiert das TCP auf alle Paketverluste auf Grund von beispielsweise einem Bitfehler, bei der Weitergabe an eine weitere Station (Handoff) oder wegen Fading durch das Aufrufen entsprechender Algorithmen, beispielsweise eine Staukontrolle und Algorithmen zur Vermeidung der Probleme oder zur erneuten Übertragung oder Anforderung von Datenpaketen. Derartige Aufrufe belasten jedoch das Gesamtsystem und führen zu einer Verschlechterung der Gesamtübertragungsleistung.

Der PEP ist eine funktionelle Ergänzung der Funkverbindungssteuer-Funktionen (RLC: Radio Link Control), welche in dem Funkzugangsnetz definiert sind. In einem stärker belasteten Funkzugangsnetz soll der PEP die Leistung des TCP verbessern, um einen besseren Datendurchsatz bzw. Paketdurchsatz zu ermöglichen. In einigen Systemen, beispielsweise dem WCDMA-Netz (WCDMA: Wireless Code Division Multiple Access) reichen bei geringeren Belastungszuständen die Funktionen niedrigerer Schichten des RLC-Protokolls ausreichend aus, um das TCP/IP-Protokoll (IP: Internet Protokoll) auszuführen. Jedoch ist bei einem hochbelasteten Netz der Einsatz des PEP erforderlich, wenn die Laststeuerung benötigt wird, beispielsweise beim Einsatz des UDD-Dienstes in dem WCDMA-System, um die Stausteuerung bzw. das Zeitablaufs/Timeout-Problem zu vermeiden, welche ansonsten durch die Funktionen des TCP-Protokolls auftreten würden.

Problematisch ist insbesondere auch die Übertragung von vollständig verschlüsselten Datenpaketen gemäß der so genannten IP-Security, wobei der gesamte Dateninhalt des zuübertragenden Datenpaketes einschließlich wesentlicher Kopfabschnittsinformationen vollständig verschlüsselt wird. In einem solchen Fall kann der PEP mangels Zugriffsmöglichkeit auf die Datenpaketnummer nicht mehr sinnvoll als zwischengeschaltete Station verwendet werden, da ihm der Zugriff auf wesentliche Daten verwehrt ist. Bekannt ist auch, dass dem PEP in bestimmten Fällen der erforderliche Schlüssel zum Dekodieren der Informationen mitgeteilt wird, so dass der PEP auch bei derartig verschlüsselten Paketen eingesetzt werden kann. In vielen Fällen sind dem PEP die Schlüsselinformationen jedoch nicht bekannt.

Aus der WO 01/60025 A2 ist ein Verfahren bekannt, bei dem abhängig von seitens von Teilnehmern oder des Betreibers definierten Regeln ein selektives Spoofing von TCP-Verbindungen in Performance Enhancing Proxies (PEP) durchgeführt wird. Die WO 01/63881 A1 zeigt ein Screening für Inhalte von Nachrichten, die Ende-zu-Ende verschlüsselt sind.

Die Aufgabe der Erfindung besteht darin, ein Kommunikationssystem zu verbessern, welches bei der Übertragung von Datenpaketen eine die Übertragung unterstützenden Einrichtung, insbesondere einen PEP einsetzt.

Diese Aufgabe wird durch ein Verfahren zum Übertragen von Datenpaketen in einem Kommunikationssystem sowie durch eine Vorrichtung zum Durchführen eines solchen Verfahrens mit den Merkmalen der unabhängigen Patentansprüche gelöst. Vorteilhafte Ausgestaltungen sind Gegenstand abhängiger Ansprüche. Ein Ausführungsbeispiel wird nachfolgend anhand der Zeichnung näher erläutert. Es zeigen:
- Fig. 1: schematisch Stationen eines Kommunikationsnetzes zum Durchführen eines solchen Verfahrens;
- Fig. 2: schematisch den Datenfluß zwischen Stationen;
- Fig. 3A: schematisch den Grundgedanken einer Transportbetriebsart bei der sicheren Übertragung;
- Fig. 3B: die Verteilung von Informationen in einem Datenpaket dafür;
- Fig. 4A: die Übertragung von Daten gemäß einer Tunnelbetriebsart für IP-gesicherte Datenpakete;
- Fig. 4B: die Anordnung von Daten in einem Datenpaket dafür;
- Fig. 5: schematisch den Fluss von IP-Datenpaketen durch eine Funknetz-Steuereinrichtung mit einem PEP;
- Fig. 6: ein Ablaufdiagramm für die Entscheidungsfindung in einem solchen PEP;
- Fig. 7: ein Leistungsdiagramm für verschiedene Protokolle und
- Fig. 8: einen beispielhaften Verfahrens- und Entscheidungsablauf.

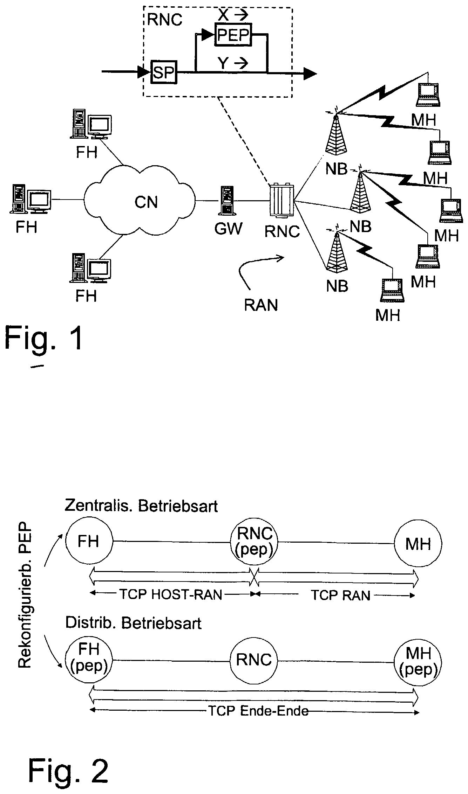

Wie aus Fig. 1 ersichtlich, besteht ein beispielhaftes Kommunikationssystem aus einem netzseitigen und einem teilnehmerseitigen Abschnitt. Dabei dienen die Begriffe netzseitig und teilnehmerseitig lediglich zur Unterscheidung verschiedener Stationen in dem netzgestützten bzw. funkgestützten Abschnitt des Kommunikationssystems. Netzseitig sind an einem Kernnetz CN (Core Network) netzseitige Stationen in Form von zum Beispiel ortsfesten Hosts FH angeschlossen. Diese kommunizieren über das Kernnetz CN miteinander oder mit teilnehmerseitigen Stationen, beispielsweise so genannten mobilen Hosts MH. Die Verbindung von dem Kernnetz CN zu den teilnehmerseitigen Stationen MH führt dabei vorzugsweise über ein Gateway GW und eine Funknetz-Steuereinrichtung RNC (Radio Network Controller). An der Funknetz-Steuereinrichtung RNC sind eine oder mehrere netzseitige Funk-Stationen NB (Node B) angeschlossen, welche eine funkgestützte Verbindung mit einer oder mehreren der teilnehmerseitigen und insbesondere funkgestützten Stationen MH aufbauen können. Das Kommunikationsnetz kann gemäß verschiedenartiger Standards aufgebaut sein, z.B. gemäß den Vorgaben des Internet-Protokolls IP und/oder des UMTS (Universal Mobile Telecommunications System).

Wie aus der schematischen Ausschnittsvergrößerung in Fig. 1 ersichtlich, werden Daten bzw. Datenpakete vom Kernnetz CN aus durch die Funknetz-Steuereinrichtung RNC hindurchgeleitet. In der Funknetz-Steuereinrichtung RNC befindet sich ein leistungssteigernder bzw. die Übertragung unterstützender Proxy PEP (Performace Enhancing Proxy), welcher funktionell als Übertragungssteuerprotokoll das TCP (Transmission Control Protocol) unterstützt. Die Unterstützung findet insbesondere zu Zeiten statt, in denen eine hohe Verkehrslast vorliegt. Während der PEP vorwiegend als Einrichtung und/oder Funktion der Funknetz-Steuereinrichtung RNC dargestellt ist, kann der PEP auch als eigenständige Einrichtung und/oder Funktion im Kommunikationssystem bereitgestellt sein oder Bestandteil einer anderen Einrichtung des Kommunikationssystems sein.

Eintreffende Datenpakete werden wahlweise über zwei verschiedene Datenwege durch die Funknetz-Steuereinrichtung bzw. die den PEP aufnehmende Einrichtung geleitet. Ein erster Datenpfad X führt dabei direkt durch den PEP, während ein zweiter Datenpfad Y den PEP umgeht. Entsprechend wird eine Entscheidungs- und/oder Schalteinrichtung SP eingangsseitig bereitgestellt, welche die Entscheidung trifft, über welchen der Datenpfade X bzw. Y eintreffende Datenpakete zu leiten sind. Die Schalteinrichtung SP kann ebenfalls als eigenständige Einrichtung ausgebildet sein, kann insbesondere aber auch eingangsseitiger Bestandteil des PEP sein.

Eine solche Anordnung ermöglicht die an die Datenauslastung angepasste Verwendung des PEP mit einem hohen Grad an Flexibilität, wobei als Unterscheidungskriterium auch die Art des Dienstes bzw. die erforderliche Dienstgüte (QoS - Quality of Service) oder andere Unterscheidungskriterien herangezogen werden können, die für bestimmte eintreffende Datenpakete bzw. deren Verbindungen erforderlich sind. Insbesondere ermöglicht die angepasste Verwendung des PEP, dass verschiedene Verbindungen von der Protokollergänzung in dem Fall profitieren, dass keine Sicherheitskompromisse eingegangen werden müssen oder andere Beschränkungen für die Verwendung eines PEP auferlegt werden.

Vorliegend wird somit insbesondere eine angepasste Verwendung des PEP in einem Funkzugangsnetz beschrieben. Zur beispielhaften Beschreibung, jedoch ohne Beschränkung auf das spezielle Kommunikationssystem, wird nachfolgend davon ausgegangen, dass die Funknetz-Steuereinrichtung RNC als die netzseitige intelligente Einheit in dem Funknetz eingerichtet ist, der PEP somit netzseitig eingerichtet ist und die Funktionen in der Funknetz-Steuereinrichtung lokalisiert sind. Jedoch ist alternativ auch der Einsatz des PEP in anderen netzseitigen oder bei z.B. umgekehrter Übertragungsrichtung auch in teilnehmerseitigen Einrichtungen oder als eigenständige Einrichtung möglich.

Um die Leistungsfähigkeit von TCP-Verbindungen zu verbessern, sollte die Funktionalität des PEP vorteilhafterweise für den Fall schlechter Verbindungsbedingungen in der Funknetz-Steuereinrichtung implementiert werden. Da das Funkverbindungs-Steuerungsprotokoll (RLC: Radio Link Control) in der Funknetz-Steuereinrichtung RNC die meisten Datenpaketverluste oder Datenverluste in der funkgestützten Verbindung bei geringer Datenauslastung selber handhaben kann, ohne dass die Gesamtübertragungsrate für diese oder andere Verbindungen nachteilhaft verschlechtert wird, wird die Ausführung der Funktionen des PEP in der Funknetz-Steuereinrichtung in einem solchen Fall nicht benötigt. Zweckmäßigerweise wird die Implementierung des PEP in der Funknetz-Steuereinrichtung daher nur in Situationen mit einer hohen Datenlast aktiviert, d.h. in Situationen, in denen Datenübertragungsanforderungen und dergleichen wegen Zeitablauf (Timeout) mit einer höheren Wahrscheinlichkeit auftreten würden. Mit anderen Worten wird eine adaptive Steuerung des Einsatzes des PEP gemäß einer Ausführungsform besonders bevorzugt.

Grundsätzlich gibt es derzeit zwei getrennte Betriebsarten, in denen die Verbindungen betrieben werden, nämlich eine Betriebsart mit verteilt bzw. aus Sicht des PEP entfernt überwachter Steuerung der Datenübertragung (distributed mode) und eine Betriebsart mit zentral überwachter Steuerung der Datenpakete. In der Betriebsart mit entfernt überwachter Steuerung ist eine TCP-Verbindung als Ende-zu-Ende-Verbindung zwischen der netzseitigen Station FH und der mobilen, teilnehmerseitigen Station MH implementiert, wobei ein Eingreifen der Funknetz-Steuereinrichtung RNC und/oder des PEP auf der Transportschicht für eine Verbindungsverbesserung nicht vorgesehen ist. Diese Betriebsart wird in den Situationen verwendet, in denen die Kanalbedingungen akzeptabel sind und die Leistungsfähigkeit gemäß dem Protokoll nicht extrem nachteilhaft beeinflussen. Die Funktionen der Protokolle der Funkverbindungssteuerung sind in diesen Fällen für die Unterstützung der TCP-Verbindungen ausreichend.

In dem Fall der Betriebsart mit zentraler Überwachung führt die TCP-Verbindung hingegen durch die Funknetz-Steuereinrichtung, welche mit dem PEP bzw. dessen Funktionalität ausgestattet ist, um die Leistungsfähigkeit des Protokolls zu verbessern. Die zentralisierte Betriebsart wird für die Fälle konfiguriert, in denen die Kanalbedingungen schlecht sind, beispielsweise auf Grund einer hohen Auslastung des Systems, einer leistungsmäßig erschöpften teilnehmerseitigen Station MH und dergleichen.

Fig. 2 stellt die beiden Betriebsarten dar, wobei in dem oberen Abschnitt die zentralisierte Betriebsart skizziert ist, während in dem unteren Figurenteil die entfernt überwachte Betriebsart skizziert ist. Als Einrichtungen sind dabei jeweils eine netzseitige Station FH und eine teilnehmerseitige Station MH dargestellt, zwischen denen eine TCP-Verbindung aufgebaut ist. Zwischen diesen Stationen befindet sich die Funknetz-Steuereinrichtung RNC.

Im Fall der zentralisierten Betriebsart ist in der Funknetz-Steuereinrichtung RNC die PEP-Funktionalität bereitgestellt. Eine erste TCP-Verbindung TCP HOST-RAN führt dabei von der netzseitigen Station FH zu dem Funkzugangsnetz bzw. dessen Funknetz-Steuereinrichtung RNC. Eine zweite TCP-Verbindung TCP RAN führt von der Funknetz-Steuereinrichtung RNC bzw. deren PEP-Funktionalität auf der Netzseite des Funkzugangs-Netzes RAN zu der teilnehmerseitigen bzw. funkgestützten Station MH.

Bei der verteilten bzw. entfernt überwachten Betriebsart führt die TCP-Verbindung TCP End als Ende-zu-Ende-Verbindung direkt von der netzseitigen Station FH zu der funkgestützten teilnehmerseitigen Station MH. Sofern eine PEP-Funktionalität vorgesehen ist, werden die entsprechenden PEP-Funktionen in einem solchen Fall in vorzugsweise den Endpunkten der TCP-Verbindung bereitgestellt, also in der netzseitigen Station FH bzw. der teilnehmerseitigen Station MH.

Nachfolgend wird eine Ausführungsform bevorzugt betrachtet, welche einem zentralisierten, verbindungsweisen und neukonfigurierbaren Verfahren unterliegt. Während der verteilten bzw. entfernt überwachten Betriebsart überwacht die Funknetz-Steuereinrichtung RNC kontinuierlich die Kanalbedingungen, beispielsweise Fading und Interferenzpegel. Auf den verfügbaren Informationen beruhend entscheidet die Funknetz-Steuereinrichtung RNC bzw. optional die Entscheidungs- bzw. Schalteinrichtung SP, ob sie in der zentralisierten Betriebsart arbeiten soll oder nicht. Solange die Kanalbedingungen gut sind und die Interferenz gering ist, kann die Funkverbindungssteuerung auftretende Verluste problemlos handhaben und eine Umschaltung in die zentralisierte Betriebsart erfolgt nicht.

Nachfolgend werden die Schritte zum Umschalten in die zentralisierte Betriebsart bzw. zum optionalen Leiten von eintreffenden Datenpaketen durch den PEP beschrieben.

Schritt A: Die Funknetz-Steuereinrichtung RNC überwacht kontinuierlich die Verbindungs- bzw. Kanalbedingungen.

Schritt B: Falls die Kanalbedingungen gut sind oder die Datenlast gering ist, wird Schritt A wiederholt. Andernfalls aktiviert die Funknetz-Steuereinrichtung RNC das PEP-Modul mit der PEP-Funktionalität.

Schritt C: Die Funknetz-Steuereinrichtung bzw. optional die darin befindliche Schalteinrichtung SP prüft für die einzelnen Verbindungen bzw. Datenpakete deren Kompatibilität hinsichtlich der Verwendung des PEP. Das Ergebnis der Kompatibilitätsbestimmung wird durch insbesondere Sicherheitsüberlegungen bestimmt:
In den meisten Fällen kann der PEP Verkehr bzw. Datenpakete handhaben, auf die Sicherheitsprotokolle angewendet wurden, wobei die Sicherheitsprotokolle üblicherweise oberhalb der Transportschicht angewendet werden. Derartige Schichten werden auch als sichere Anschlussschichten (SSL: Secured Socket Layer) bezeichnet, da das zugehörige SSL-Protokoll über dem TCP/IP (IP: Internet Protocol) und unter Protokollen auf höheren Schichten, beispielsweise HTTP (Hyper Text Transfer Protocol) oder IMAP (Internet Message Access Protocol) läuft. Gemäß den dazu verwendeten Protokollen wird der TCP-Kopfabschnitt nicht verschlüsselt, so dass der PEP auf die Daten zugreifen kann und dadurch die Möglichkeit erhält, entsprechende Datenbestätigungen zu manipulieren. Dies ermöglicht beispielsweise, dass der PEP eine Bestätigung an den Absender des empfangenen Datenpaketes zurückschickt, die ansonsten eigentlich von dem eigentlichen Empfänger des Datenpaketes an den Sender geschickt worden wäre. Auf diese Art und Weise kann sicher gestellt werden, dass ein Datenpaket die Strecke bis zum PEP fehlerfrei zurückgelegt hat, so dass für den weiteren Versandt nur noch die Strecke zwischen dem PEP als zwischengeschaltetem Sender und dem eigentlichen Empfänger, beispielsweise der teilnehmerseitigen Station MH auf der anderen Seite der Funkschnittstelle zu überbrücken und zu überwachen ist.

Heutzutage schließt jedoch nur eine begrenzte Anzahl von Anwendungen die Unterstützung für die Verwendung der Transportschichtsicherheit ein. Andererseits kann durch beliebige Anwendungen auch die so genannte Netzschicht-Sicherheit verwendet werden, die auch als IPsec (IPSecurity) bezeichnet wird. Diese ist für die Anwendung transparent und bietet Zugriffssteuerung, Datenintegrität, Authentisierung und Vertrauenswürdigkeit. All diese Dienste vorausgesetzt, wird eine Schutzgarantie für IP und Protokolle höherer Schichten gegeben.

Tatsächlich bietet die Netzschicht-Sicherheit IPsec nicht nur Datenintegrität für die Informationsdaten, sondern auch Datenintegrität für die diesbezüglichen Nachrichten bzw. Steuerdaten, also beispielsweise Bestätigungen (sACK) auf der Transportschicht, so dass Angreifer Informationen, beispielsweise Netzstatistiken, d. h. den Fluss von Bestätigungen, nicht nutzen können, um einen Angriff durchzuführen. Andernfalls könnten Hacker beispielsweise den TCP-Kopfabschnitt angreifen und die Fenstergröße auf Null ändern, was den Host bzw. die datensendende Station FH bzw. MH zwingen würde, in eine Beharrungsbetriebsart (persist mode) zu gehen und das Senden von Daten zu stoppen. Möglich wäre für einen Angreifer auch, die gleiche Bestätigungsnummer zu regenerieren, so dass der Host die entsprechende Bestätigung als duplizierte Bestätigung interpretieren würde, was zu einer Reduzierung der Fenstergröße und folglich einer Reduzierung des Durchsatzes führen würde. Darüber hinaus könnte sogar bewirkt werden, dass die Verbindung heruntergefahren wird.

In all den Fällen, bei denen zur Verhinderung von Angriffen und dergleichen die Netzschicht-Sicherheit IPsec verwendet wird, d. h. die Datenpakete weitestgehend verschlüsselt sind, kann der PEP, welcher in der zentralisierten Betriebsart verwendet wird, nicht auf den Verkehr einwirken, da er die TCP-Kopfabschnitte der IP-Datenpakete wegen der Verschlüsselung der IP-Pakete nicht untersuchen kann. Die Verschlüsselung der IP-Pakete mittels der Verschlussmechanismen der Netzschicht-Sicherheit IPsec erzeugt neue Datenpakete mit einem Sicherheits-Nutzlastkopfabschnitt (ESP: Encapsulating Security Payload), welche sowohl in der Transportbetriebsart als auch der Tunnelbetriebsart den eigentlichen TCP-Kopfabschnitt und die eigentliche Nutzlast bzw. die Informationsdaten für den PEP unverständlich machen.

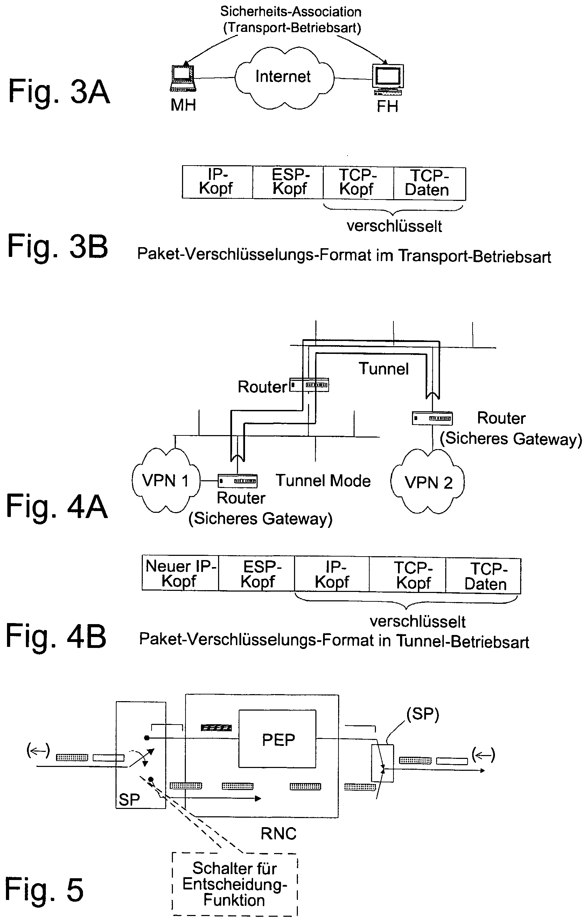

Wie aus Fig. 3A ersichtlich, findet eine Übertragung von Datenpaketen zwischen einer netzseitigen Station FH und einer funkgestützten Station MH über das Internet bzw. Kernnetz CN in einer Art und Weise statt, bei der in der Transport-Betriebsart die Sicherheitsbedingungen einen Zugriff auf die Daten verhindern. Wie aus Fig. 3B ersichtlich, besteht ein derartiges Datenpaket für eine Übertragung in der Transport-Betriebsart aus einem IP-Kopfabschnitt, einem ESP-Kopfabschnitt und einem verschlüsselten Abschnitt. Die verschlüsselten Daten bestehen wiederum aus dem TCP-Kopfabschnitt und den eigentlichen TCP-Nutzdaten bzw. TCP-Informationsdaten.

Von den beiden Betriebsarten wird die Transport-Betriebsart typischerweise in Punkt-zu-Punkt- bzw. Peer-to-Peer-Kommunikationen verwendet, um Netzsicherheit für die Zwischenstrecke zu bieten. Das eigentliche Datenpaket wird entsprechend verschlüsselt, wobei der IP-Kopfabschnitt nicht verschlüsselt wird, so dass er gelesen und von beliebigen standardisierten Einrichtungen oder Softwarefunktionen verwendet werden kann. Ein solches Datenpaket kann somit auch von dem PEP verwendet werden.

Alternativ dazu gibt es die Tunnel-Betriebsart, die für Zugriffe von entfernten Stationen verwendet wird und Sicherheit von einem Standort zu einem anderen definierten Standort (Side-to-Side-Security) bietet. Dies schließt insbesondere virtuelle private Netze mit ein.

Wie aus Fig. 4A ersichtlich, wird eine Datenverbindung beispielsweise von einem ersten virtuellen privaten Netz VPN 1 zu einem zweiten virtuellen privaten Netz VPN 2 aufgebaut. Zwischengeschaltet sind jeweils bei jedem dieser virtuellen privaten Netze VPN 1, VPN 2 Router, d.h. Leiteinrichtungen, die als sicheres Gateway zu dem Internet oder einem beliebigen anderen Netz dienen. Üblicherweise befinden sich auf der Verbindungsstrecke zwischen diesen beiden Routern weitere Router, die das Weiterleiten der Datenpakete durch das zwischengeschaltete Netz organisieren.

Wie aus Fig. 4B ersichtlich, werden bei der Tunnel-Betriebsart die zu versendenden Datenpakete vollständig verschlüsselt und in Form neuer Datenpakete durch das zwischengeschaltete Netzsystem gesendet. Ein solches Versand-Datenpaket mit der Netzschicht-Sicherheit-Verschlüsselung IPsec besteht üblicherweise aus einem neuen IP-Kopfabschnitt, der an die Zieladresse oder eine sichere Zwischenstation gerichtet ist. Diesem folgt ein ESP-Kopfabschnitt. Angehängt ist dann eine Folge von Daten, die vollständig verschlüsselt sind und aus dem eigentlichen ursprünglichen IP-Kopfabschnitt, dem TCP-Kopfabschnitt und den TCP-Daten bestehen. Hierbei wird somit die ursprüngliche Information des eigentlichen IP-Kopfabschnittes vollständig verschlüsselt, so dass sie für den PEP oder andere zwischengeschaltete Einrichtungen und Funktionen nicht verwertbar ist. Das gesamte ursprüngliche Datenpaket aus Kopfabschnitt und Nutzlast wird somit verschlüsselt und erhält einen neuen Kopfabschnitt gemäß den Vorgaben der Netzschicht-Sicherheit IPsec, wobei dieser neue Kopfabschnitt in zumindest ein ESP-Kopfabschnittsfeld und zumindest ein IP-Kopfabschnittsfeld mit einem automatischen Anhang (Trailer) unterteilt ist, so dass die Topologie der geschützten Standorte an den eigentlichen Enden der Datenverbindung versteckt wird.

Während bei der vorstehenden Beschreibung des Ausführungsbeispiels der Fig. 4A davon ausgegangen wurde, dass die gesamten zwischenliegenden Stationen keinen Zugriff auf die eigentlichen verschlüsselten Daten haben, so dass das vollständig verschlüsselte Datenpaket das PEP-Modul ohne Nutzungsmöglichkeit der leistungssteigernden Funktionen passiert bzw. um dieses herum umgeleitet wird, ist es auch möglich, dass der entsprechende Teilnehmer dem PEP in einer zwischengeschalteten Station, beispielsweise in dem Router aus Fig. 4A, vertrauen kann und diesem den Schlüssel mitteilt. In einem solchen Fall kann der zwischen die Endsysteme zwischengeschaltete PEP die Netzschicht-Sicherheit IPsec für seine Verarbeitungszwecke zwischenzeitlich aufheben, so dass seine leistungssteigernden Funktionen eingesetzt werden können. Im üblichen Fall werden die Teilnehmer der endseitigen Systeme zwischengeschalteten PEPs jedoch nicht vertrauen, da nichts so sicher ist, wie eine Ende-zu-Ende-Sicherheit, da die Gefahr besteht, dass der Verkehr bzw. die Daten aufgedeckt werden können, wenn sie für die zwischengeordnete Verarbeitung entschlüsselt werden.

Für den Fall, dass ein zwischengeschaltetes Netz als sicheres Netz akzeptiert wird und den Entschlüsselungscode mitgeteilt bekommt, ist es auch möglich, dass die Datenpakete nur auf der Strecke bis zu einem solchen zwischengeschaltetem Netz und auf der Strecke von diesem zwischengeschaltetem Netz zu einem nächsten sicheren Punkt gemäß der Netzschicht-Sicherheit IPsec verschlüsselt übertragen werden, während die Übertragung innerhalb des zwischengeschalteten sicheren Netzes unverschlüsselt oder mit einer weniger aufwändigen Verschlüsselung gemäß der Transport-Betriebsart erfolgt. In einem solchen Fall wird somit die Sicherheit auf verschiedenen Abschnitten der Verbindungsstrecke auf unterschiedliche Art und Weise implementiert, so dass ein PEP in dem zwischengeschalteten Netz in vorteilhafter Art und Weise eingesetzt werden kann. Ein möglicher Ansatz ist die so genannte Mehrschicht-IP-Sicherheit (Multi-Layer-IP-Security), bei welcher der TCP-Kopfabschnitt auf einer Schicht verschlüsselt wird und der PEP Sicherheitsassoziationen einschließt, die zum Entschlüsseln des TCP-Kopfabschnittes verwendet werden, wobei die TCP-Nutzlast also die eigentlichen Informationsdaten über die gesamte Ende-zu-Ende-Strecke verschlüsselt werden. Dies macht ein Vertrauen mit Blick auf den Betreiber und die Funktionalität des PEP weniger wichtig, erhöht natürlich die Komplexität des Netzschicht-Sicherheits-Konzeptes.

Eine Station bzw. deren Benutzer/Teilnehmer hat somit die Möglichkeit, Netzschichtsicherheit IPsec zu wählen, wobei außerdem bestimmt werden kann, dass ein hoher Sicherheitgrad verwendet wird, welcher Angriffe verhindert, aber auch keine Kompromisse hinsichtlich einer effizienteren Datenübertragung ermöglicht, oder dass die hohe Sicherheit abgeschaltet wird, beispielsweise bei normalen Anwendungen, was einen Kompromiss bezüglich der Sicherheit mit Blick auf einen höheren Datendurchsatz zur Folge hat. Zweckmäßigerweise sollte die Station bzw. der Host MH bzw. FH derart konfiguriert werden, dass beide Pakettypen verschlüsselte und nicht-verschlüsselte Pakete unterstützt werden.

Um netzseitig bzw. seitens der den PEP unterstützenden Einrichtung eintreffende Datenpakete entsprechend richtig verarbeiten zu können, wird eine kleine entscheidungsdurchführende Einrichtung, vorliegend die Schalteinrichtung SP als Entscheidungseinrichtung bereitgestellt. Die vorliegend z. B. in der Funknetz-Steuereinrichtung RNC angeordnete Entscheidungs- bzw. Schalteinrichtung SP leitet Datenpakete, insbesondere IP-Datenpakete für den Fall zum PEP weiter, dass keine Netzschicht-Sicherheit IPsec auf das Datenpaket angewendet wurde, und lässt mittels Netzschicht-Sicherheit IPsec verschlüsselte Datenpakete am PEP vorbei passieren. Schematisch sind die entsprechenden Datenpfade X bzw. Y in Fig. 1 und Fig. 5 dargestellt. Für den Fall der bidirektionalen Übertragung von Datenpaketen wird zweckmäßigerweise auch an der anderen Seite einer solchen Anordnung eine Entscheidungseinrichtung SP für den Transport von Datenpaketen in umgekehrter Richtung eingerichtet.

Um Erkennen zu können, ob bzw. wie ein empfangenes Datenpaket verschlüsselt ist, kann bei Datenpaketen gemäß dem hier beispielhaften Internetprotokoll IP auf ein Feld im Kopfabschnitt zurückgegriffen werden, in welchem angegeben ist, welche Protokollart verwendet wurde. Mit dem in diesem Feld eingetragenen Zeichen, üblicherweise einer Zahl, kann eine zugreifende Anwendung leicht bestimmen, ob das entsprechende Datenpaket mit einer Sicherheitsfunktionalität wie der Netzschicht-Sicherheit IPsec geschützt ist oder nicht, und daraufhin eine Entscheidung hinsichtlich der weiteren Verarbeitung dieses Datenpaketes treffen. Gemäß dem Standard IPv4 wird dieses Feld im Kopfabschnitt als "protocol" bezeichnet und gemäß IPv6 wird dieses Feld als "next header" bezeichnet. Für den Fall, dass ein ESP-Kopfabschnitt vorliegt, enthält dieses Feld gemäß den derzeit üblichen Protokollen die Dezimalzahl 50.

Für den Fall, dass der PEP vertrauenswürdig ist, d. h. den Sicherheits-Zuordnungsschlüssel aufweist, werden die Datenpakete entschlüsselt, durch das PEP-Modul geleitet und dann erneut verschlüsselt und letztendlich zu deren Zieladresse weitergesendet.

Fig. 5 zeigt den Transport von IP-Paketen von einer Station zu einer anderen durch die Funknetz-Steuereinrichtung RNC hindurch. Bei der dargestellten Ausführungsform wird nicht nur zwischen verschlüsselten Paketen und unverschlüsselten Paketen, sondern zusätzlich auch zwischen verschlüsselten Paketen mit einem in dieser Einrichtung vorliegenden zugeordneten Sicherheits-Zuordnungsschlüssel unterschieden. Die verschlüsselten Pakete, für welche kein Schlüssel vorliegt, werden von der Entscheidungseinrichtung SP über den direkten Datenpfad Y zum Ausgang der Funknetz-Steuereinrichtung geleitet. Für diese Datenpakete findet somit eine transparente Übertragung statt. Die nicht verschlüsselten Pakete und die Pakete, welche in dieser Einrichtung entschlüsselt werden können, werden hingegen über den anderen Datenpfad X zum PEP geleitet, um dort entsprechend seiner Funktionalität verarbeitet zu werden. Anschließend erfolgt eine erneute Verschlüsselung und der Weitertransport über den Ausgang der Funknetz-Steuereinrichtung in Richtung der eigentlichen Empfängerstation. Die Verschlüsselung und Entschlüsselung von Datenpaketen, für die in dieser Einrichtung ein Schlüsselpaar vorliegt, kann dabei wahlweise in der Entscheidungseinrichtung SP, dem PEP oder einer weiteren Einrichtung dieser Gesamtanordnung vorgenommen werden. Entsprechendes gilt natürlich auch für die erneute Verschlüsselung zum Weitertransport des Datenpakets.

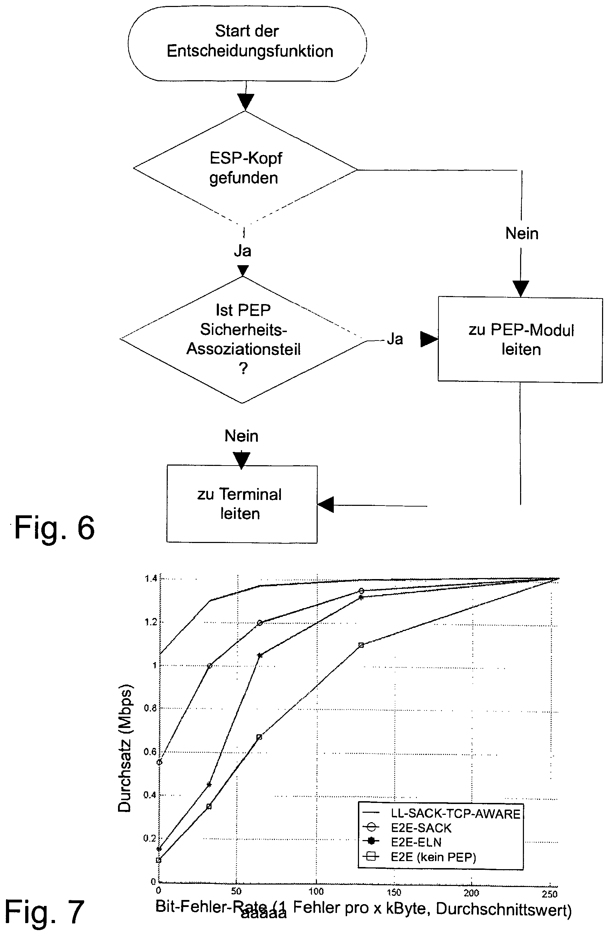

Fig. 6 verdeutlicht einen möglichen Ablauf des in dieser Anordnung erforderlichen Steuerverfahrens mit Blick auf die Sicherheitsaspekte in der Entscheidungseinrichtung SP. Nach dem Eintreffen eines Datenpakets bei der Entscheidungseinrichtung SP startet der Verfahrensablauf (Start). In einem ersten Entscheidungsschritt wird geprüft, ob die Dezimalzahl in dem "Protokoll"-Feld des IP-Kopfabschnittes den Wert "50" hat. Falls nicht, wird das Datenpaket direkt über den Datenpfad X zum PEP-Modul weitergeleitet. Falls der Wert "50" entspricht, wird überprüft, ob der PEP Teil des Sicherheitssystems ist und ein entsprechender Sicherheitsschlüssel in der Anordnung vorliegt. Falls ja, wird das Datenpaket ebenfalls über den Datenpfad X zum PEP-Modul weitergeleitet. Falls nein, wird das Datenpaket direkt über den Datenpfad Y zum Ausgang der Anordnung bzw. in Richtung der Zieladresse weitergeleitet. Datenpakete die dem PEP-Modul zugeleitet wurden, werden dort entsprechend verarbeitet und nach der erneuten Verschlüsselung ebenfalls zum Ausgang der Anordnung (RNC) weitergeleitet.

Darüber hinaus kann eine Vielzahl weiterer Funktionen berücksichtigt werden, beispielsweise, dass es für die meisten IPsec-Implementierungen möglich ist, dass diese Sicherheitsassoziationen zwischen zwei verschiedenen IP-Adressen haben und entsprechend diese Sicherheitsassoziationen ein- oder ausgeschaltet werden können, sofern eine solche Funktionalität wie bei dem in Fig. 6 dargestellten zweiten Abfrageschritt implementiert ist. Selbiges kann natürlich auch für weitere Sicherheitsprotokolle und Sicherheitssysteme zusätzlich oder alternativ umgesetzt werden. Ein solcher Verfahrensablauf in der Anordnung mit dem PEP bietet dem Sender bzw. der sendenden Station von Datenpaketen eine große Flexibilität, da bei dem Absenden von Datenpaketen ausgewählt werden kann, ob diese gemäß der Netzschicht-Sicherheit IPsec verschlüsselt werden sollen, gemäß einfacherer Sicherheitssysteme verschlüsselt werden sollen oder ohne irgend einen Schutz frei übertragen werden sollen.

Beim Versand von Datenpaketen kann somit senderseitig entschieden werden, ob Datenpakete in der zentralisierten Betriebsart oder in der entfernt überwachten Betriebsart (distributed mode) übertragen werden sollen, wobei entsprechend die Funktionalität von einem oder mehreren PEP auf der Verbindungsstrecke gar nicht, vollständig oder nur bei vertrauenswürdigen PEP ausgenutzt werden kann.

Letztendlich bietet die zentralisierte Betriebsart einen hohen Durchsatz und funktioniert mit insbesondere vorgegebenen ortsfesten Hosts als netzseitigen Stationen FH. Allerdings wird dabei eine Signalisierungsüberlast während des Handovers (Übergabe) innerhalb der Funknetz-Steuereinrichtung RNC bzw. der den PEP aufnehmenden Einrichtung in Kauf genommen (shifting context). Kontext ist dabei für die Übergabe- bzw. Handover-Funktion innerhalb der Funknetz-Steuereinrichtung zur Übertragung erforderlich. Außerdem ist ein Kompromiss hinsichtlich der Sicherheit erforderlich. Bei der Betriebsart mit entfernter Überwachung ist hingegen eine höhere Sicherheit gegeben und der Signalisierungsaufwand bei der Übergabe innerhalb der Funknetz-Steuereinrichtung RNC ist geringer. Allerdings muss in einem solchen Fall die Station FH am Ende der Datenverbingung PEP-Protokolle verstehen, wenn eine möglichst optimale Unterstützung gewährleistet werden soll.

Die beiden Betriebsarten beruhen dabei auf zwei verschiedenen Ansätzen zur Verbesserung der Leistungsfähigkeit bei TCP in verlustigen Systemen, d. h. insbesondere in funkgestützten Netzen. In dem Fall der zentralisierten Betriebsart, bei der der PEP in der Funknetz-Steuereinrichtung implementiert ist, verschleiert der Proxy, d. h. der PEP, jegliche nicht-Staubedingten Verluste von dem bzw. gegenüber dem TCP-Sender und macht daher keine Änderungen hinsichtlich der bestehenden Sender-Implementierungen erforderlich. Die Intuition hinter diesem Ansatz besteht darin, dass das Problem lokal ist und lokal gelöst werden sollte, d. h. nur in dem Bereich der funkgestützten Verbindung, nicht aber in dem weiteren Bereich der Verbindungsstrecke im Festnetz.

Im Fall der Betriebsart mit entfernter Überwachung werden Verluste auf der funkgestützten Verbindung durch die Verwendung von selektiven Bestätigungen SACK (selective acknowledgement) oder expliziten Verlustmeldungen ELN (explicit loss notification) gehandhabt.

Ein Beispiel in einer zentralisierten Betriebsart ist ein zuverlässiges Verbindungsschichtprotokoll, welches für TCP gegenwärtig ist, wie beispielsweise das so genannte SNOOP-Protokoll, welches von UC Burkley entwickelt wurde. Simulationen haben gezeigt, dass dieser Ansatz eine Verbesserung der Leistungsfähigkeit insbesondere bei einer relativ hohen Bitfehlerwahrscheinlichkeit bietet. Die Hauptmerkmale können mit den folgenden Aussagen beschrieben werden: ein PEP-Modul fängt hereinkommende Pakete ab. In dem Fall von Paketverlusten auf der funkgestützten Verbindung sendet das PEP-Modul die verlorenen Pakete erneut aus seinem Zwischen- bzw. Cache-Speicher, blockiert alle duplizierten Bestätigungen und verhindert, dass diese duplizierten Bestätigungen den ursprünglich sendenden Host bzw. die sendende Station FH erreichen, da die Stau-Steuer-Algorithmen oder dergleichen nicht aufgerufen werden und der Durchsatz gewahrt werden kann. Nachteile bei diesem Ansatz bestehen darin, dass die Übergabe innerhalb der Funknetz-Steuereinrichtung RNC Verzögerungen auf Grund der Übertragung im Verbindungszustand verursachen können, welcher in der Funknetz-Steuerung gespeichert ist. Außerdem ist dieser Ansatz nicht kompatibel zu der Verwendung der Netzschicht-Sicherheit IPsec, da ein Zugriff auf die vollverschlüsselten TCP-Kopfabschnitte nicht oder nur optional möglich ist.

Die Betriebsart mit der entfernten Überwachung macht Ende-zu-Ende-Protokolle erforderlich, die es erforderlich machen, dass der TCP-Sender, vorliegend die netzseitige Station FH Verluste durch die Verwendung von zwei Techniken handhabt. Als erstes verwenden die entsprechenden Stationen eine Art selektiver Bestätigungen (SACKs) um dem Sender zu ermöglichen, auch mehrere Paketverluste in einem zeitlichen Fenster ohne eine Neusortierung in einem groben Zeitablauffenster erneut zu versenden. Das derzeit bekannte Konzept der selektiven Bestätigung SACK RFC schlägt vor, dass jede Bestätigung eine Information über bis zu 3 nicht-benachbarten Datenblöcken enthält, die von dem Empfänger erfolgreich empfangen wurden. Jeder Datenblock wird durch seine Anfangs- und End-Sequenznummer beschrieben. Auf Grund der begrenzten Anzahl von Blöcken ist es am besten, den Sender über die möglichst zuletzt empfangenen Blöcke zu informieren. Zweitens versuchen sie, den Sender zwischen einem Stau und anderen Formen des Verlustes unter Verwendung einer expliziten Verlustbenachrichtigung (ELN) eine Unterscheidung zu ermöglichen. Der Sender kann dann das Starten von Stau-Steuer-Algorithmen vermeiden, wenn nicht-Stau-bedingte Verluste auftreten. Bei diesem Verfahren wird die Beeinträchtigung eines Pakets auf der Verbindungsschicht zu der Transportschicht weitergeleitet, welche eine ELN-Benachrichtigung mit der duplizierten Bestätigung für das verlorene Paket sendet.

Der Ende-zu-Ende-Ansatz mit der selektiven Bestätigung SACK zeigt eine gute Leistungsfähigkeit bei einer mittleren Fehlerrate, ist einfach zu implementieren und kompatibel zu der Anwendung der Netzschicht-Sicherheit IPsec.

Fig. 7 veranschaulicht Simulationen für die verschiedenen Verfahren zur Übertragung von Daten gemäß den vorstehend beschriebenen Ansätzen. Dabei wird eine typische funkgestützte Umgebung mit Ende-zu-Ende-TCP-Verbindungen ohne den Einsatz eines PEP in einer gestrichelten Linie dargestellt. Bei einer durchschnittlichen Bit-Fehlerrate pro kByte in einem Bereich von 0 bis 250 nimmt der Durchsatz (in Mbps) von etwa 0,1 bis auf 1,4 kontinuierlich zu. Im Vergleich zu den weiteren Übertragungsraten ist der Durchsatz pro relativer Bit-Fehlerrate jedoch stets am geringsten. Die durchgezogene Linie stellt die Leistungsfähigkeit bei einer typischen zentralisierten Betriebsart dar, welche eine wesentlich höhere Rate des Informationsdurchsatzes gegenüber den Ende-zu-Ende-Protokollen bietet. Bei einer durchschnittlichen Bit-Fehlerrate von 0 beträgt der Durchsatz bereits mehr als 1,0 Mbps. Die beiden anderen Protokolle, E2E-SACK und E2E-ELN sind Beispiele für eine Implementierung der Betriebsart mit aus Sicht von Einrichtungen auf der Verbindungsstrecke entfernter Überwachung. Für diese beiden Systeme bietet die gepunktete Linie, also E2E-SACK, für die Leistungsfähigkeit des Ende-zu-Ende-TCP-Protokolls unter Verwendung selektiver Bestätigungen den besten Durchsatz und kann als das stärkste Protokoll für die verteilte Betriebsart mit entfernter Überwachung angesehen werden. Bei einer durchschnittlichen Bit-Fehlerrate von Null beträgt der anfängliche Durchsatz knapp 0,6 Mbps. Bei einer durchschnittlichen Bit-Fehlerrate pro kByte von 250 nähern sich alle vier dargestellten Kurven dem Durchsatz von 1,4 Mbps an.

Zusammenfassend hervorzuheben ist somit insbesondere die adaptive Verwendung eines PEP, was einer im Netz zwischengeschalteten Einrichtung wie insbesondere der Funknetz-Steuereinrichtung RNC ermöglicht, in dem Funkzugangsnetz zu entscheiden, ob eine TCP-Verbindung direkt zu der funkgestützten Station MH eingerichtet werden soll, um empfangene Datenpakete direkt weiterzuleiten, oder ob empfangene Datenpakete durch ein PEP-Modul geleitet werden sollen, um Vorteile aus der Leistungssteigerung durch das Hinzufügen des PEP ziehen zu können. Vorteilhaft ist auch eine Entscheidungseinrichtung bzw. Schalteinrichtung SP, welche eine Unterscheidung nicht nur nach dem Kriterium treffen kann, ob Daten verschlüsselt sind oder nicht, sondern zusätzlich unterscheiden kann, ob im Fall von verschlüsselten Datenpaketen ein zugeordneter Schlüssel oder ein zugeordnetes Schlüsselpaar vorliegen. Insbesondere können auch verschiedene PEP-Implementierungen umgesetzt werden, um eine Schaltung zum PEP für den Fall vornehmen zu können, dass keinerlei Sicherheitbeschränkungen vorliegen. Zweckmäßig ist eine derartige Verfahrensweise bzw. der Einsatz entsprechender Einrichtungen bei verschiedenartigsten Funkzugangsnetzen, insbesondere Funkzugangsnetze, bei denen ein gewisses Maß an IP-basierten Diensten erforderlich ist.

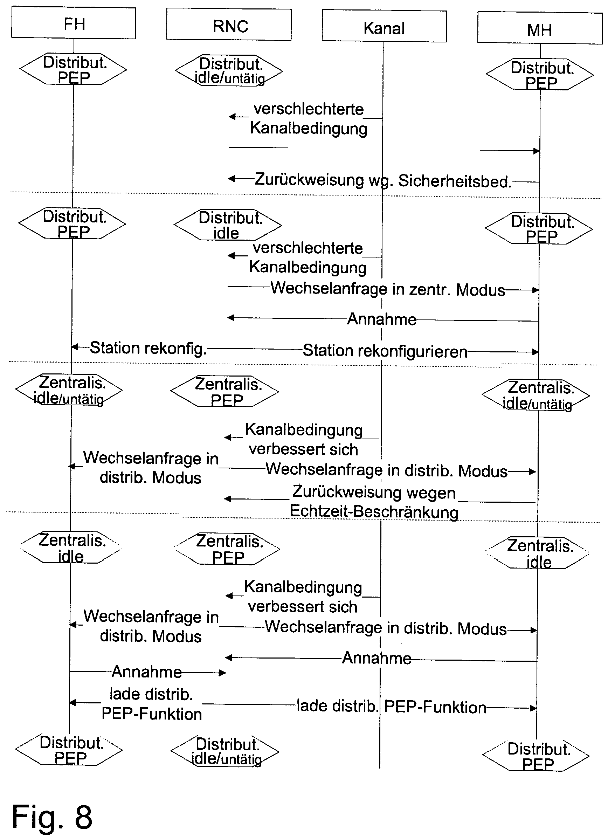

Fig. 8 stellt schematisch die verschiedenen Abläufe für die Entscheidungsfindung und Zuweisung von Funktionalität in einem solchen Kommunikationssystem dar. Die linke Spalte beschreibt Funktionen und Aktionen der netzseitigen Station FH. Die zweite Spalte beschreibt entsprechende Funktionen und Aktionen bei der Einrichtung des Festnetzes oder vorliegend des Funkzugangs-Netzes, welche optional die PEP-Funktionalität übernehmen kann. Vorliegend ist dies die Funknetz-Steuereinrichtung RNC. Die dritte Spalte gibt die Übertragungsbedingungen auf dem jeweils für eine Verbindung verwendeten Kanal an. In der vierten Spalte werden Funktionalität bzw. Aktivität der anderen endseitigen Station, vorliegend der funkgestützten mobilen Station MH beschrieben. Bei der Darstellung soll ein zeitlicher Ablauf von oben nach unten angenommen werden, wobei vier Verfahrensabschnitte dargestellt sind.

Zu Beginn wird angenommen, dass die netzseitige Station sich in der distributed Betriebsart, also der Betriebsart mit Überwachung an den Verbindungsendpunkten befindet. Die netzseitige Station FH hat entsprechend auch eine PEP-Funktionalität. Die Funknetz-Steuereinrichtung RNC befindet sich ebenfalls in der distributed Betriebsart und somit aus Sicht von Datenpaketen im Ruhezustand (idle). Die funkgestützte Station MH befindet sich ebenfalls in der distributed Betriebsart und weist entsprechend auch eine PEP-Funktionalität auf.

Wenn zu einem späteren Zeitpunkt eine Verschlechterung der Kanalbedingungen vom Kanal aus an die Funknetz-Steuereinrichtung gemeldet wird oder in dieser erkannt wird, sendet die Funknetz-Steuereinrichtung RNC eine Anforderung zum Wechsel in die zentralisierte Betriebsart zur mobilen bzw. funkgestützten Station MH, welche vorliegend als die datenpaketsendende Station MH betrachtet wird. Wenn die funkgestützte Station MH aus Sicherheitsgründen oder sonstigen Gründen die Änderung der Betriebsart ablehnt, bleiben die Stationen in ihrem bisherigen Zustand. Ein zweiter Fall, der darunterstehend skizziert ist, stellt die Situation dar, bei der auf die Anforderung in die zentralisierte Betriebsart zu wechseln von der funkgestützten Station MH die Mitteilung an die Funknetz-Steuereinrichtung RNC gesendet wird, dass dieser Wechsel akzeptiert wird. Daraufhin veranlasst die Funknetz-Steuereinrichtung durch entsprechende Mitteilungen an die netzseitige Station FH und die funkgestützte Station MH eine Rekonfigurierung dieser Stationen bzw. Terminals, so dass ein Wechsel in die zentralisierte Betriebsart stattfindet, wie dies in der nächsten Zeile dargestellt ist. In dieser zentralisierten Betriebsart wechselt die PEP-Funktionalität zu der Funknetz-Steuereinrichtung RNC, während die beiden anderen Stationen FH bzw. MH, welche die endseitigen Stationen der aufgebauten Übertragungsverbindung darstellen, bezüglich der PEP-Funktionalität in den Ruhezustand treten.

Nachdem zu einem späteren Zeitpunkt von der Funknetz-Steuereinrichtung erfasst wird, dass sich die Kanalbedingungen verbessern, sendet die Funknetz-Steuereinrichtung RNC Anforderungen zum Ändern in die entfernt überwachte Betriebsart zu den beiden verbindungsendseitigen Stationen FH und MH. Für den Fall, dass von einer dieser Stationen MH eine Zurückweisung der Anforderung auf Grund beispielsweise erforderlicher Echtzeit-Dienst-Beschränkungen zurückgesendet wird, verbleiben, die Stationen in der zentralisierten Betriebsart. Für den Fall, dass auf die Anforderung von beiden verbindungsendseitigen Stationen FH und MH eine Akzeptierungsmitteilung empfangen wird, sendet die Funknetz-Steuereinrichtung RNC entsprechende Anweisungen an diese Stationen, in die distributed Betriebsart zu wechseln.

## Patentansprüche

1. Verfahren zum Übertragen von Datenpaketen in einem Kommunikationssystem mit einer Übertragungsstrecke zwischen einer Datenpakete sendenden Station (FH; MH) und einer empfangenden Station (MH; FH) und mit einer dazwischen geschalteten Unterstützungseinrichtung und/oder Unterstützungsfunktion (PEP) zum Unterstützen der Übertragung auf zumindest einem Teil der Übertragungsstrecke, bei dem
die Unterstützungseinrichtung und/oder Unterstützungsfunktion (PEP) die Datenpakete von der sendenden Station (FH; MH) empfängt und zur empfangenden Station (MH; FH) sendet, und mittels Kopfabschnittsdaten eine Übertragung der Datenpakete auf dem unterstützten Teil der Übertragungsstrecke überwacht, **dadurch gekennzeichnet, dass** eine Entscheidungseinrichtung (SP) verschlüsselte Datenpakete, welche in der Unterstützungseinrichtung und/oder Unterstützungsfunktion (PEP) für eine Verarbeitung nicht ausreichend identifiziert werden können, an der Unterstützungseinrichtung und/oder Unterstützungsfunktion (PEP) vorbei leitet und verschlüsselte Datenpakete, welche in der Unterstützungseinrichtung und/oder Unterstützungsfunktion (PEP) für eine Verarbeitung ausreichend identifiziert werden können, an die Unterstützungseinrichtung und/oder Unterstützungsfunktion (PEP) leitet.

2. Verfahren nach Anspruch 1, bei dem
die Unterstützungseinrichtung und/oder Unterstützungsfunktion (PEP) auf die Datenpakete bezogene Nachrichten (sACK) der empfangenden Station (MH; FH) empfängt und zu der sendenden Station (FH; MH) sendet, und
die Entscheidungseinrichtung (SP) verschlüsselte Nachrichten, welche in der Unterstützungseinrichtung und/oder Unterstützungsfunktion (PEP) für eine Verarbeitung nicht ausreichend identifiziert werden können, an der Unterstützungseinrichtung und/oder Unterstützungsfunktion (PEP) vorbei leitet.

3. Verfahren nach Anspruch 1 oder 2, bei dem
die Unterstützungseinrichtung und/oder Unterstützungsfunktion (PEP) eine Übertragung über eine Funk-Schnittstelle unterstützt.

4. Verfahren nach einem vorstehenden Anspruch, bei dem
die Entscheidung in der Entscheidungseinrichtung (SP) abhängig von senderseitig (FH; MH) vorgegebenen Sicherheitskriterien für die Übertragung getroffen wird.

5. Verfahren nach einem vorstehenden Anspruch, bei dem
die Übertragung über eine TCP-Verbindung erfolgt.

6. Verfahren nach einem vorstehenden Anspruch, bei dem
die Entscheidung in der Entscheidungseinrichtung (SP) abhängig von der Systemauslastung getroffen wird.

7. Verfahren nach einem vorstehenden Anspruch, bei dem
der Unterstützungseinrichtung und/oder Unterstützungsfunktion (PEP) verschlüsselte Datenpakete und/oder Nachrichten zugeleitet werden, für die ein Schlüssel zum Entschlüsseln zumindest der für die Unterstützungseinrichtung und/oder Unterstützungsfunktion (PEP) erforderlichen Kopfabschnittsdaten vorliegt.

8. Verfahren nach Anspruch 7, bei dem
die Datenpakete und/oder Nachrichten vor dem Weiterversenden erneut verschlüsselt werden.

9. Verfahren nach einem vorstehenden Anspruch, bei dem
die Übertragung der Datenpakete und Nachrichten gemäß IPbasierter Dienstekriterien durchgeführt wird.

10. Vorrichtung, mit
einer Unterstützungseinrichtung und/oder Unterstützungsfunktion (PEP) zum Unterstützen des Übertragens von Datenpaketen einer sendenden Station (FH; MH) auf einem unterstützten Teil einer Übertragungsstrecke in einem Kommunikationssystem zu einer empfangenden Station (MH; FH) abhängig von Kopfabschnittsdaten der Datenpakete,
**gekennzeichnet durch**
eine Entscheidungseinrichtung (SP) zum Entscheiden der Zuleitung von empfangenen verschlüsselten Datenpaketen an die Unterstützungseinrichtung und/oder Unterstützungsfunktion (PEP), wenn die Datenpakete in der Unterstützungseinrichtung und/oder Unterstützungsfunktion (PEP) für eine Verarbeitung ausreichend identifiziert werden können, oder der Vorbeileitung an dieser, wenn die Datenpakete in der Unterstützungseinrichtung und/oder Unterstützungsfunktion (PEP) für eine Verarbeitung nicht ausreichend identifiziert werden können.

11. Vorrichtung nach Anspruch 10, wobei
die Unterstützungseinrichtung und/oder Unterstützungsfunktion (PEP) zusätzlich ausgestaltet ist zum Unterstützen des Übertragens von den Datenpaketen zugeordneten Nachrichten einer empfangenden Station (MH; FH) auf einem unterstützten Teil einer Übertragungsstrecke abhängig von Kopfabschnittsdaten der Nachrichten, und
die Entscheidungseinrichtung (SP) zusätzlich ausgestaltet ist zum Entscheiden der Zuleitung der empfangenen Nachrichten an die Unterstützungseinrichtung und/oder Unterstützungsfunktion (PEP) oder der Vorbeileitung an dieser.

## Claims

1. Method for transmitting data packets in a communication system with a transmission link between a station sending data packets (FH; MH) and a receiving station (MH; FH) and with an intermediate performance enhancing device and/or performance enhancing function (PEP) to enhance transmission on at least a portion of the transmission link, with which
the performance enhancing device and/or performance enhancing function (PEP) receives the data packets from the sending station (FH; MH) and sends them to the receiving station (MH; FH) and uses header data to monitor transmission of the data packets on the enhanced portion of the transmission link, **characterised in that** a decision-making device (SP) routes encrypted data packets, which cannot be identified adequately for processing in the performance enhancing device and/or performance enhancing function (PEP), past the performance enhancing device and/or performance enhancing function (PEP) and routes encrypted data packets, which can be identified adequately for processing in the performance enhancing device and/or performance enhancing function (PEP), to the performance enhancing device and/or performance enhancing function (PEP).

2. Method according to claim 1,
with which the performance enhancing device and/or performance enhancing function (PEP) receives messages (sACK) relating to the data packets from the receiving station (MH; FH) and sends them to the sending station (FH; MH) and
the decision-making device (SP) routes encrypted messages, which cannot be identified adequately for processing in the performance enhancing device and/or performance enhancing function (PEP), past the performance enhancing device and/or performance enhancing function (PEP).

3. Method according to claim 1 or 2,
with which the performance enhancing device and/or performance enhancing function (PEP) enhances transmission via a radio interface.

4. Method according to one of the preceding claims,
in which the decision is made in the decision-making device (SP) as a function of security criteria predefined by the sender (FH; MH) for transmission.

5. Method according to one of the preceding claims,
in which transmission takes place via a TCP connection.

6. Method according to one of the preceding claims,
in which the decision is made in the decision-making device (SP) as a function of system usage.

7. Method according to one of the preceding claims,
in which encrypted data packets and/or messages are routed to the performance enhancing device and/or performance enhancing function (PEP), for which a key is present for decrypting at least the header data required for the performance enhancing device and/or performance enhancing function (PEP).

8. Method according to claim 7,
in which the data packets and/or messages are re-encrypted before being forwarded.

9. Method according to one of the preceding claims,
in which data packets and messages are transmitted according to IP-based service criteria.

10. Device with
a performance enhancing device and/or performance enhancing function (PEP) to enhance the transmission of data packets from a sending station (FH; MH) on an enhanced portion of a transmission link in a communication system to a receiving station (MH; FH) as a function of header data of the data packets, **characterised by**
a decision-making device (SP) to decide whether to route the received encrypted data packets to the performance enhancing device and/or performance enhancing function (PEP) if the data packets can be identified adequately for processing in the performance enhancing device and/or performance enhancing function (PEP) or to route them past it if the data packets cannot be identified adequately for processing in the performance enhancing device and/or performance enhancing function (PEP).

11. Device according to claim 10,
whereby the performance enhancing device and/or performance enhancing function (PEP) is also configured to enhance the transmission of messages assigned to the data packets from a receiving station (MH; FH) on an enhanced portion of a transmission link as a function of header data of the messages and
the decision-making device (SP) is also configured to decide whether to route the received messages to the performance enhancing device and/or performance enhancing function (PEP) or to route them past it.

## Revendications

1. Procédé pour transmettre des paquets de données dans un système de communication avec une voie de transmission entre une station (FH ; MH) émettrice de paquets de données et une station réceptrice (MH ; FH) et avec un dispositif d'assistance et/ou une fonction d'assistance (PEP) intercalés pour assister la transmission sur au moins une partie de la voie de transmission, dans lequel le dispositif d'assistance et/ou la fonction d'assistance (PEP) reçoivent les paquets de données de la station émettrice (FH ; MH) et les envoient à la station réceptrice (MH ; FH), et surveillent, au moyen de données d'en-tête, une transmission des paquets de données sur la partie assistée de la voie de transmission, **caractérisé en ce qu'**un dispositif de décision (SP) achemine des paquets de données cryptés qui ne peuvent pas être identifiés de manière suffisante pour un traitement dans le dispositif d'assistance et/ou la fonction d'assistance (PEP) en contournant le dispositif d'assistance et/ou la fonction d'assistance (PEP) et envoie au dispositif d'assistance et/ou à la fonction d'assistance (PEP) des paquets de données cryptés qui peuvent être identifiés de manière suffisante pour un traitement dans le dispositif d'assistance et/ou la fonction d'assistance (PEP).

2. Procédé selon la revendication 1, dans lequel le dispositif d'assistance et/ou la fonction d'assistance (PEP) reçoivent des messages (sACK) de la station réceptrice (MH ; FH) en rapport avec les paquets de données et les envoient à la station émettrice (FH ; MH) et le dispositif de décision (SP) achemine des messages cryptés qui ne peuvent pas être identifiés de manière suffisante pour un traitement dans le dispositif d'assistance et/ou la fonction d'assistance (PEP) en contournant le dispositif d'assistance et/ou la fonction d'assistance (PEP).

3. Procédé selon la revendication 1 ou 2, dans lequel le dispositif d'assistance et/ou la fonction d'assistance (PEP) assiste une transmission via une interface radio.

4. Procédé selon une revendication précédente, dans lequel la décision est prise dans le dispositif de décision (SP) en fonction de critères de sécurité pour la transmission spécifiés côté émetteur (FH ; MH).

5. Procédé selon une revendication précédente, dans lequel la transmission a lieu par l'intermédiaire d'une liaison TCP.

6. Procédé selon une revendication précédente, dans lequel la décision est prise dans le dispositif de décision (SP) en fonction de l'utilisation du système.

7. Procédé selon une revendication précédente, dans lequel sont amenés au dispositif d'assistance et/ou à la fonction d'assistance (PEP) des paquets de données et/ou des messages cryptés pour lesquels il y a une clé pour décrypter au moins les données d'en-tête requises pour le dispositif d'assistance et/ou la fonction d'assistance (PEP).

8. Procédé selon la revendication 7, dans lequel les paquets de données et/ou les messages sont de nouveau cryptés avant d'être réexpédiés.

9. Procédé selon une revendication précédente, dans lequel la transmission des paquets de données et des messages est effectuée selon des critères de services basés IP.

10. Dispositif comportant un dispositif d'assistance et/ou
une fonction d'assistance (PEP) pour assister la transmission de paquets de données d'une station émettrice (FH ; MH) sur une partie assistée d'une voie de transmission dans un système de communication vers une station réceptrice (MH ; FH) en fonction de données d'entête des paquets de données,
**caractérisé par**
un dispositif de décision (SP) pour décider d'amener des paquets de données cryptés reçus au dispositif d'assistance et/ou à la fonction d'assistance (PEP) si les paquets de données peuvent être identifiés de manière suffisante pour un traitement dans le dispositif d'assistance et/ou la fonction d'assistance (PEP), ou de les leur faire contourner si les paquets de données ne peuvent être identifiés de manière suffisante pour un traitement dans le dispositif d'assistance et/ou la fonction d'assistance (PEP).

11. Dispositif selon la revendication 10, le dispositif d'assistance et/ou la fonction d'assistance (PEP) étant en outre conçus pour assister la transmission de messages d'une station réceptrice (MH ; FH) associés aux paquets de données sur une partie assistée d'une voie de transmission en fonction de données d'en-tête des messages, et le dispositif de décision (SP) étant en outre conçu pour décider d'amener les messages reçus au dispositif d'assistance et/ou à la fonction d'assistance (PEP) ou de les leur faire contourner.
